# EUROPÄISCHE PATENTSCHRIFT

(11) **EP 0 942 508 B1**
(45) Veröffentlichungstag und Bekanntmachung des Hinweises auf die Patenterteilung: **29.09.2004**
(21) Anmeldenummer: 99102250.0
(22) Anmeldetag: 05.02.1999
(51) Int. Cl.: H02H 5/12

(54) **Elektrowerkzeug mit Ableitstromsensorik**
Electric tool with fault current sensor
Outil électrique avec capteur de courant de fuite

(30) Priorität: 07.03.1998 DE 19809783
(43) Veröffentlichungstag der Anmeldung: 15.09.1999
(73) Patentinhaber: Metabowerke GmbH, 72622 Nürtingen (DE)
(72) Erfinder: Stickel, Wolfgang, 72660 Beuren (DE)
(74) Vertreter: Patentanwälte Dipl.-Ing. Bodo Thielking Dipl.-Ing. Otto Elbertzhagen

(56) Entgegenhaltungen:
- DE-A- 3 813 811
- FR-A- 2 586 137
- US-A- 5 016 135

## Beschreibung

Die Erfindung bezieht sich auf ein Elektrowerkzeug mit einer Schutzschaltungsanordnung entsprechend der mit den Gattungsmerkmalen des Patentanspruchs 1 näher bezeichneten Art.

Ein solches Elektrowerkzeug ist aus der deutschen Patentschrift DE 38 13 811 C2 bekannt. Dort ist in die Leitung, die von dem Werkzeughalter bzw. dem Werkzeug zur Spannungsteilerschaltung hinführenden Leitung lediglich ein hochohmiger Widerstand eingefügt, der als sogenannter Isölationswiderstand notwendig ist, um die berührbaren, elektrisch leitfähigen Teile des Elektrowerkzeugs ausreichend von den Polen zu trennen, die mit dem versorgenden Netz in Verbindung stehen. Es hat sich in der Praxis gezeigt, daß zwar einerseits zusammen mit den hochohmigen Widerständen in der Spannungsteilerschaltung dieser hochohmiger Widerstand in deren Verbindungsleitung zum Werkzeughalter bzw. zum Werkzeug hin für einen gefährdungsfreien Betrieb ausreicht, aber den vorgeschriebenen Prüfbedingungen nicht immer entsprochen werden kann.

Die Prüfbestimmungen für handbedienbare Elektrowerkzeuge (z.B. EN 50144-1) schreiben nämlich vor, daß der Isolationswiderstand zwischen jedem der mit dem Versorgungsnetz verbindbaren Pole und den berührbaren, elektrisch leitenden Teilen der Maschine, also auch dem Werkzeughalter bzw. dem Werkzeug, wenigstens sieben M Ohm betragen muß und mittels Gleichspannung zu messen ist. Damit liegt der auf diese Weise zu messende Isolationswiderstand in einer Größenordnung, der aufgrund unvermeidbarer Leckströme bei der Gleichstrommessung nicht immer eingehalten werden kann. Hierbei ist zu berücksichtigen, daß der Gesamtwiderstand, der sich zwischen dem Werkzeughalter und dem Werkzeug und den mit dem Versorgungsnetz zu verbindenden Polen ergibt, immer noch so beschaffen sein muß, daß bei Erdung des Werkzeugs ein ausreichender Ableitstrom fließt und erfaßbar ist. Ansonsten kann über die Schutzschaltungsanordnung eine sichere Abschaltung des Elektromotors der Maschine nicht bewirkt werden. Das aber ist wichtig, wenn es sich beispielsweise bei dem Elektrowerkzeug um eine Handbohrmaschine handelt, mit der versehentlich eine elektrische Leitung, ein Metallrohr, wie eine Wasserleitung, ein Armierungseisen oder dergl. angebohrt wird und durch sofortiges Stillsetzen der Maschine ein Schaden verhindert werden soll.

Der Erfindung liegt deshalb die Aufgabe zugrunde, ein Elektrowerkzeug der gattungsbildenden Art zu schaffen, mit dem die Sicherheitsprüfung des Isolationswiderstandes ohne weiteres bestanden wird.

Diese Aufgabe wird bei einem Elektrowerkzeug der gattungsgemäßen Art nach der Erfindung durch die kennzeichnenden Merkmale des Patentanspruchs 1 gelöst.

Für die Erfindung ist wesentlich, daß der in die Leitung zwischen dem Werkzeughalter bzw. dem Werkzeug und die Spannungsteilerschaltung eingefügte Kondensator für Gleichstrom einen sehr hochohmigen Widerstand darstellt. Entsprechend hochohmig ist das Dielektrikum dieses Kondensators zu wählen. Für Wechselstrom stellt der genannte Kondensator einen weitaus geringeren Widerstand dar, womit für die angestrebte Sensorfunktion bei Erdung dieses Werkzeughalters oder des Werkzeugs ein ausreichend großer Ableitstrom fließen kann, über den das der Steuervorrichtung zuzuleitende Ausschaltsignal gebildet wird. Ohne weiteres kann der Wechselstromwiderstand des Kondensators so festgelegt werden, daß die Betriebssicherheit des Elektrowerkzeugs nicht beeinträchtigt ist.

Der wesentliche Unterschied zwischen der durch die Erfindung vorgeschlagenen Lösung und der Lösung nach US-A-5,016,135 besteht darin, daß die Serienkapazität/en nicht in den Phasenleitungen bzw. in der Zuleitung angeordnet ist/sind, sondern in der Ableitung über Werkzeughalter bzw. Werkzeug nach Masse bzw. zum erdnahen Potential.

Vorteilhafte Ausgestaltungsmerkmale der Erfindung ergeben sich aus den Unteransprüchen.

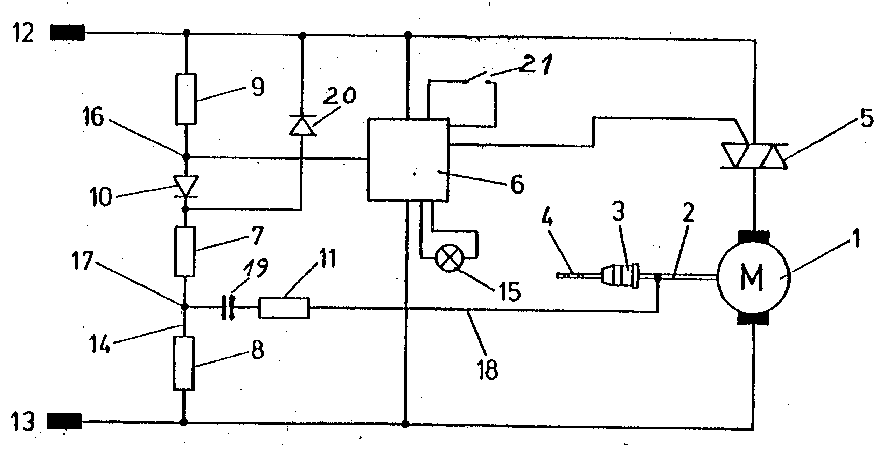

Die Erfindung wird nachfolgend anhand der Zeichnung an einem Ausführungsbeispiel noch näher erläutert. Die Zeichnung zeigt in schematischer Darstellung den Schaltplan eines Elektrowerkzeugs, das mit einer Schutzschaltungsanordnung ausgestattet ist, um bei Erdung des Werkzeughalters oder des Werkzeugs den elektrischen Antriebsmotor der Maschine stillzusetzen.

Im einzelnen erkennt man in der Zeichnung einen Einphasenwechselstrommotor 1 einer elektrischen Handbohrmaschine, bei der es sich um ein besonders gängiges Elektrowerkzeug handelt. Der Motor 1 ist mechanisch über ein nicht näher dargestelltes Getriebe und eine Welle 2 mit einem Werkzeughalter 3, wie einem Bohrfutter, verbunden. In den Werkzeughalter 3 ist ein Bohrwerkzeug 4 eingespannt, und es versteht sich, daß die Welle 2, der Werkzeughalter 3 und das Bohrwerkzeug 4 aus Metall bestehen und entsprechend elektrisch leitend sind.

Dem Motor 1 ist ein elektronischer Schalter 5, nämlich ein Triac, vorgeschaltet, wobei das Gate des elektronischen Schalters 5 mit einer Steuervorrichtung 6 verbunden ist. Im übrigen ist der Schalter 5 ebenso wie der hiervon abliegende Anschluß des Motors 1 mit Polklemmen 12 und 13 verbunden, an denen beliebig vertauschbar der nicht geerdete Phasenleiter einerseits und der Null- oder Mittelpunktsleiter andererseits eines geerdeten Wechselspannungsnetzes angeschlossen werden.

Symmetrisch zwischen den beiden Polklemmen 12 und 13 liegen in Reihe miteinander zwei hochohmige Widerstände 7 und 8, deren Verbindung 14 mit einem Knotenpunkt 17 über eine Leitung 18 elektrisch mit dem Werkzeughalter 3, dem Bohrwerkzeug 4 oder der Antriebswelle 2 verbunden ist. Das Potential am Knotenpunkt 17 liegt in der Mitte zwischen den differierenden Potentialen der Polklemmen 12 und 13, denn die hochohmigen Widerstände 7 und 8 sind gleich groß, und in Relation dazu sind die weiter in Reihe damit liegenden elektrischen Bauteile hinsichtlich ihres Widerstandes vernachlässigbar. So stellen die Widerstände 7 und 8 eine Spannungsteilerschaltung dar, die im wesentlichen bzgl. der beiden Pole 12 und 13 symmetrisch aufgebaut ist.

Der eine hochohmige Widerstand 7 dieser Spannungsteilerschaltung ist mit der zugehörigen Polklemme 12 über eine Diode und einen Widerstand 9 verbunden. Der Widerstand 9 ist ein Meßwiderstand und gegenüber dem hochohmigen Widerstand vernachlässigbar klein. Zwischen dem Widerstand 9 und dem hochohmigen Widerstand 7 liegt ein Verbindungspunkt 16, der mit einem Steuereingang der Steuervorrichtung 6 verbunden ist. Über diesen Steuereingang kann die Steuervorrichtung 6 mit einem Sperr- oder Auslösesignal beaufschlagt werden, wonach der Durchgang durch den elektronischen Schalter unterbrochen und damit der Motor 1 stromlos gemacht wird. Die Diode 10 dient dazu, über den Steuereingang der Steuervorrichtung 6 unerwünschte Kurzschlüsse zu vermeiden.

An der Steuervorrichtung 6 ist ein Anzeigegerät 15 angeschlossen, bei dem es sich um ein optisches oder akustisches Anzeigegerät handeln kann, im Bedarfsfall kann das Gerät auch zur Abgabe sowohl eines optischen als auch eines akustisches Signals ausgelegt sein. Das Anzeigegerät 15 spricht im Fehlerfall dauerhaft an, und der dafür vorgesehen Schaltungsteil ist vorzugsweise so ausgelegt, daß nach einem Fehlerfall vor der erneuten Inbetriebnahme des Elektrowerkzeug die Anzeige zurückgesetzt werden muß.

Bei fehlerfreiem Betrieb des Elektrowerkzeugs liegt am Knotenpunkt 17 der Spannungsteilerschaltung das Mittenpotential zwischen den Polklemmen 12 und 13 an. Entsprechend dem geringen Spannungsabfall über den Meßwiderstand 9 stellt sich am Abgriff 16 ein Referenzpotential ein, bei dem die Abschaltfunktion der Steuervorrichtung 6 nicht in Aktion tritt. Trifft beim Arbeiten das Bohrwerkzeug 4 auf einen elektrisch leitenden Körper auf, der Erdpotential oder ein erdnahes Potential hat, dann tritt am Knotenpunkt 17 der Spannungsteilerschaltung und damit auch am Abgriff 16 eine Potentialverschiebung zum Erdpotential hin auf, durch die infolge eines Vergleichs mit dem Referenzpotential in der Steuervorrichtung 6 die Sperre für den elektronischen Schalter 5 ausgelöst wird. Das gleiche tritt auch dann ein, wenn mit dem Bohrwerkzeug 4 eine nicht geerdete Phase einer elektrischen Leitung angebohrt wird, dann findet die Potentialverschiebung in entgegengesetzter Richtung statt, wodurch in gleicher Weise infolge des Vergleichs mit dem Referenzpotential in der Steuervorrichtung 6 der Durchgang des elektronischen Schalters 5 gesperrt wird.

In gleicher Weise reagiert die Schutzschaltungsanordnung auch dann, wenn einer der beiden hochohmigen Widerstände 7 oder 8 defekt ist. Zusätzlich ist in die Leitung 18 zur Antriebswelle 2 hin noch ein hochohmiger Widerstand 11 eingefügt, der zum weiteren Schutz der Bedienungsperson bei Berührung des Bohrwerkzeugs 4, des Werkzeughalters 3 oder sonstiger berührbarer Metallteile an dem Elektrowerkzeug dient, damit im Fehlerfall nur ein unbedeutender Ableitstrom über den Körper der Bedienungsperson abgeführt wird.

Trotz dieser Vorkehrungen besteht das Problem, daß selbst bei passender Dimensionierung der hochohmigen Widerstände 7, 8 und 11, die auf die Bildung des Auslösesignals für die Steuervorrichtung 6 abgestimmt ist, der verlangte Isolationswiderstand, der jeweils zwischen einem der beiden Pole 12 oder 13 und den außen am Elektrowerkzeug berührbaren Metallteilen, wie dem Werkzeughalter 3, zu messen ist, nicht eingehalten werden kann. Dies liegt zum einen an der Prüfmethode, die mit Gleichstrom erfolgen muß und an dem geforderten Isolationswiderstand, der größer als 7 M Ohm zu sein hat. Deshalb ist in die Leitung 18 zwischen dem Widerstand 11 und dem Knoten 17 der Spannungsteilerschaltung ein Kondensator 19 eingefügt, der ein sehr hochohmiges Dielektrikum hat und einerseits bei der Gleichstrommessung den ausreichend hochohmigen Isolationswiderstand sicherstellt, während er beim Wechselstrombetrieb der Maschine einen für die Erfassung des Ableitstromes niedrigeren Widerstand hat, damit bei Erdung des Werkzeugs 4 oder des Werkzeughalters 3 das Auslösesignal für die Sperrvorrichtung 6 zum Absperren des elektronischen Schalters 5 sicher erzeugt wird. Grundsätzlich können sogar die Widerstände 7 und 8 je für sich so hochohmig ausgelegt werden und der Gleichstrom- und Wechselstromwiderstand des Kondensators 19 so hoch gewählt sein, daß sogar bei Weglassen des hochohmigen Widerstandes 11 in der Leitung 18 die Bedienungsperson bei Berührung des Werkzeughalters und des Werkzeugs 4 auch im Fehlerfall nicht gefährdet ist.

Die Diode 10 ist in Richtung zur Spannungsteilerschaltung hin leitend, entsprechend liegt sie mit ihrer Kathode an dem Meßwiderstand 9 an. Zwischen dem Meßwiderstand 9 und der Diode 10 liegt der Abgriff 16, über den das Auslösesignal für die Steuervorrichtung 6 anhand einer Potentialverschiebung erfaßt wird. Der Anodenzweig der Diode 10 ist mittels einer Diode 20 mit der Polklemme 12 verbunden, wobei die Anode dieser Diode 20 an der Polklemme 12 anliegt. Hierdurch wird im Kurzschlußfall im Bereich der Spannungsteilerschaltung eine zusätzliche Ableitung geschaffen, die ebenfalls dazu genutzt werden kann, das Auslösesignal für die Steuervorrichtung 6 zum Sperren des Schalters 5 zu bilden.

Gelegentlich ist es erforderlich, die Ableitstromsensorik abzuschalten. Das ist der Fall, wenn an geerdeten Werkstükken Bohrarbeiten durchgeführt werden sollen. Dies kommt bei Bauten vor, wenn in einen geerdeten Stahlträger eingebohrt werden muß. Hierzu ist ein außen an dem Elektrowerkzeug bedienbarer Taster 21 vorgesehen, der mit der Steuervorrichtung 6 in Verbindung steht, um darin eine Kippstufe betätigen zu können. Diese Kippstufe ist mit einem Tastspeicher ausgestattet, damit bei einmaligem Antippen des Tasters 21 die Sensorfunktion abgeschaltet wird und zum Aktivieren der Sensorfunktion der Taste 21 abermals gedrückt werden kann. Die aktivierte oder deaktivierte Sensorfunktion kann durch geeignete Signalmittel an der Maschine, wie Leuchtdioden, angezeigt werden. Des weiteren ist der dem Taster 21 zugeordnete Schaltungsteil so ausgebildet, daß bei jedem erneuten Netzanschluß die Sensorfunktion aktiviert ist. Insoweit kann also nur an der betriebsbereiten Maschine die Sensorfunktion ausgeschaltet werden, was eine bewußte Betätigung des Tasters 21 erfordert.

## Patentansprüche

1. Elektrowerkzeug mit einem aus einem geerdeten Wechselstromnetz zu speisenden, zweipolig damit zu verbindenden Motor (1), der in Reihe mit einem von einer Steuervorrichtung (6) angesteuerten, elektronischen Schalter (5) liegt und der mechanisch mit einem in einem Werkzeughalter (3) eingespannten Werkzeug verbunden ist, wobei der Werkzeughalter oder das Werkzeug elektrisch mit einer Schutzschaltungsanordnung verbunden ist, über die beim Auftreffen des Werkzeugs auf einen geerdeten Gegenstand ein Ableitstrom fließt und die beim Auftreten dieses Ableitstromes über die Steuervorrichtung den Durchgang durch den elektronischen Schalter (5) sperrt, wozu zur Erfassung des Ableitstromes der Werkzeughalter oder das Werkzeug mittels einer auf eine Spannungsteilerschaltung mit hochohmigen Widerständen (7, 8) führenden Leitung mit jedem der netzseitig anzuschließenden Pole (12, 13) verbunden und an der Spannungsteilerschaltung ein sich beim Auftreten des Ableitstromes ergebende Potentialänderung als Auslösesignal für die Steuervorrichtung (6) abgegriffen ist,
**dadurch gekennzeichnet,**
**daß** in der Leitung (18) zwischen dem Werkzeughalter (3) bzw. dem Werkzeug (4) und der Spannungsteilerschaltung ein Kondensator (19) angeordnet ist.

2. Elektrowerkzeug nach Anspruch 1,
**dadurch gekennzeichnet,**
**daß** dem Kondensator (19) ein hochohmiger Widerstand (11) in der Leitung (18) vorgeschaltet ist.

3. Elektrowerkzeug nach Anspruch 1 oder 2,
**dadurch gekennzeichnet,**
**daß** der Kondensator (19) über je einen hochohmigen Widerstand (7, 8) mit jedem Pol (12, 13) verbunden und in einem dieser beiden Zweige ein niederohmiger Meßwiderstand (9) und der Abgriff (16) zur Erfassung der Potentialänderung angeordnet ist.

4. Elektrowerkzeug nach Anspruch 3,
**dadurch gekennzeichnet,**
**daß** der Meßwiderstand (9) unmittelbar mit dem betreffenden Pol (12) und mit dem in Reihe liegenden, hochohmigen Widerstand (7 ) über eine in Richtung zur Spannungsteilerschaltung hin leitende Diode (10) verbunden ist, wobei der Abgriff (16) zur Steuervorrichtung (6) hin zwischen dem Meßwiderstand (9) und dieser Diode (10) liegt.

5. Elektrowerkzeug nach Anspruch 4,
**dadurch gekennzeichnet,**
**daß** parallel zum Meßwiderstand (9) und der Diode (10) eine weitere, mit ihrer Anode mit dem zugehörigen Pol (12) verbundene Diode (20) angeordnet ist.

## Claims

1. Electric tool with a motor (1) which is to be fed from an earthed alternating current network and which is to be connected bi-polar thereto and which lies in series with an electronic switch (5) controlled by a control device (6) and which is connected mechanically to a tool clamped in a tool holder (3) whereby the tool holder or tool is connected electrically to a protective circuit assembly through which when the tool strikes an earthed object a discharge current flows and which as this discharge current appears blocks by the control device the passage through the electronic switch (5), for which for detecting the discharge current the tool holder or the tool is connected by means of a lead leading to a voltage divider circuit with high-ohmic resistances (7, 8) to each of the poles (12, 13) which are to be connected on the mains side and at the voltage divider circuit a potential change which is brought about as the discharge current appears is picked up as the release signal for the control device (6),
**characterised in that**
a capacitor (19) is disposed in the lead (18) between the tool holder (3) or tool (4) and the voltage divider circuit.

2. Electric tool according to claim 1,
**characterised in that**
a high-ohmic resistance (11) is connected into the lead (18) in front of the capacitor (19).

3. Electric tool according to claim 1 or 2,
**characterised in that**
the capacitor (19) is connected to each pole (12, 13) through a high-ohmic resistance (7, 8) and in one of these two branches there is a low-ohmic measuring resistance (9) and sensor (16) for detecting the potential change.

4. Electric tool according to claim 3,
**characterised in that**
the measuring resistance (9) is connected directly to the relevant pole (12) and to the high-ohmic resistance (7) in series therewith through a diode (10) which leads towards the voltage divider circuit whereby the sensor (16) for the control device (6) lies between the measuring resistance (9) and this diode (10).

5. Electric tool according to claim 4,
**characterised in that**
a further diode (20) connected by its anode to the associated pole (12) is arranged parallel to the measuring resistance (9) and the diode (10).

## Revendications

1. Outil électrique avec un moteur (1) devant être alimenté à partir d'un réseau de courant alternatif avec terre et raccordé à lui à deux pôles, lequel est en série avec un commutateur (5) électronique, excité par un dispositif de commande (6) et est relié mécaniquement à un outil qui est serré dans un porte-outil (3), ledit porte-outil ou l'outil étant relié électriquement à un circuit de commutation de protection, à travers lequel circule un courant de fuite, lors de l'entrée en contact de l'outil avec un objet mis à la terre, et qui, lors de l'apparition de ce courant de fuite, coupe la liaison avec le commutateur électronique (5), par l'intermédiaire du dispositif de commande, le porte-outil ou l'outil étant, pour détecter le courant de fuite, relié, par une ligne menant à un circuit diviseur de tension, à des résistances de valeur ohmique élevée, à chacun des pôles (12, 13) à raccorder au réseau, et une modification du potentiel, qui se produit lors de l'apparition du courant de fuite, étant prélevée au circuit diviseur de tension, sous la forme d'un signal de déclenchement pour le dispositif de commande (6).

2. Outil électrique selon la revendication 1,
**caractérisé en ce que**,
dans la ligne (18), une résistance de valeur ohmique élevée (11) est connectée en amont du condensateur (19).

3. Outil électrique selon la revendication 1 ou 2,
**caractérisé en ce que**
le condensateur (19) est relié à chaque pôle (12, 13), par l'intermédiaire d'une résistance respective de valeur ohmique élevée (7, 8) et qu'une résistance de précision de valeur ohmique faible (9) et le capteur (16) pour la détection de la modification du potentiel sont disposés dans l'une de ces deux branches.

4. Outil électrique selon la revendication 3,
**caractérisé en ce que**
la résistance de précision (9) est directement reliée au pôle concerné (12) et à la résistance de valeur ohmique élevée (7) en série, par l'intermédiaire d'une diode (10) conductible en direction du circuit diviseur de tension, le capteur (16) étant situé vers le dispositif de commande (6), entre la résistance de précision (9) et cette diode (10).

5. Outil électrique selon la revendication 4,
**caractérisé en ce que**
parallèlement à la résistance de précision (9) et à la diode (10), une autre diode (20) est disposée, laquelle est reliée par son anode au pôle associé (12).
